# EUROPEAN PATENT SPECIFICATION

(11) **EP 0 859 224 B1**
(45) Date of publication and mention of the grant of the patent: **24.03.2004**
(21) Application number: 98100647.1
(22) Date of filing: 15.01.1998
(51) Int. Cl.: G01L 3/14, G01P 3/481, G01L 5/22, G01L 3/10, G01P 3/484, A61G 5/00, B62M 23/00

(54) **Torque and number of revolutions sensor with single slip ring**
Drehmoment und Drehzahl Sensor mit einem einzigen Schleifring
Capteur de couple et nombre de révolutions avec une seule bague glissante

(30) Priority: 17.02.1997 JP 3163197
(43) Date of publication of application: 19.08.1998
(73) Proprietor: Honda Giken Kogyo Kabushiki Kaisha, Minato-ku, Tokyo (JP)
(72) Inventor: Takeda, Toru, 1-4-1 Chuo, Wako-shi, Saitama (JP); Hatanaka, Kaoru, 1-4-1 Chuo, Wako-shi, Saitama (JP); Tanaka, Kunihiko, 1-4-1 Chuo, Wako-shi, Saitama (JP)
(74) Representative: Liska, Horst, Dr.-Ing.

(56) References cited:
- US-A- 4 827 123
- US-A- 5 350 955
- PATENT ABSTRACTS OF JAPAN vol. 096, no. 011, 29 November 1996 & JP 08 178769 A (YAMAHA MOTOR CO LTD), 12 July 1996
- PATENT ABSTRACTS OF JAPAN vol. 008, no. 001 (P-246), 6 January 1984 & JP 58 167965 A (HIROSHI FUKUZAWA), 4 October 1983
- PATENT ABSTRACTS OF JAPAN vol. 097, no. 009, 30 September 1997 & JP 09 126917 A (YAMAHA MOTOR CO LTD), 16 May 1997

## Description

The present invention relates to a torque and a number of revolutions sensor which are preferably applicable to an electrically-assisted bicycle, an electrically-assisted wheel chair, or the like.

There is known a wheel chair which includes a potentiometer for detecting input torque in order to transmit assist power to wheels in accordance with the input torque, as disclosed in Japanese Patent Laid-Open Publication No. Hei 8-117291.

There has been a strong demand for detecting number of revolutions and a running speed of rotary members such wheels as well as input torque in order to control assist power of an electrically-assisted bicycle or wheel chair. To meet such a demand, such a vehicle of the prior art is provided with not only an input torque sensor such as a potentiometer but also with a number of revolutions sensor mainly comprising a reluctor or a gear connected to rotary members, and an electromagnetic pick-up coil. This means an increased number of components.

US-A-5 350 955 discloses a sensor with a stationary member and a rotating member provided with annular tracks forming slip rings on the same side of the rotary member.

The present invention is conceived in order to overcome the foregoing problem, and has a first object to provide a torque sensor for detecting not only torque but also number of revolutions of rotary members without increasing a number of components. A second object the present invention is to provide a novel and simplified number of revolutions sensor which can detect number of revolutions of the rotary members.

In order to accomplish the first object of the invention, claim 1 defines a torque and number of revolutions sensor comprising: an output rotary member, an input rotary member rotatable coaxially with the output rotary member; a power transmission member being elastically deformed in response to rotating torque input to the input rotary member and transmitting the rotating torque to the output rotary member; a stationary member disposed at a predetermined position with respect to the output and input rotary members; a detecting member for detecting relative angular displacement of the output and input rotary members in response to the torque input to the input rotary member; and a slip ring having a pluarlity of conductive tracks which are integrally rotatable with one of the output rotary member and the input rotary member in order to provide the stationary member with electrical signals detected by the detecting member, and are arranged concentrically and annularly, wherein number of revolutions detecting annular tracks contacting number of revolutions detecting brushes with the slip ring, being disposed concentrically with the plurality of conductive tracks and receiving from the number of revolutions detecting brushes electrical signals varying periodically in response to the revolution of the slip ring, wherein the plurality of conductive tracks and the speed detecting tracks are disposed on a first surface of the slip ring confronting the stationary member, and the detecting member is interposed between a second surface of the slip ring and a detecting rotary member which confronts the second surface of the slip ring in a manner such that the other of the output rotary member and the input rotary member is integrally rotatable with the detecting rotary member.

Therefore, the number of revolutions can be detected using the slip ring for receiving the torque detecting an electrical signal from the detecting section, without increasing a number components for revolution detection.

Effective use of the front and rear surfaces of the slip ring enables the detection of torque and number of revolutions using a compact structure.

The invention will be described with reference to embodiments shown in the accompanying drawings.

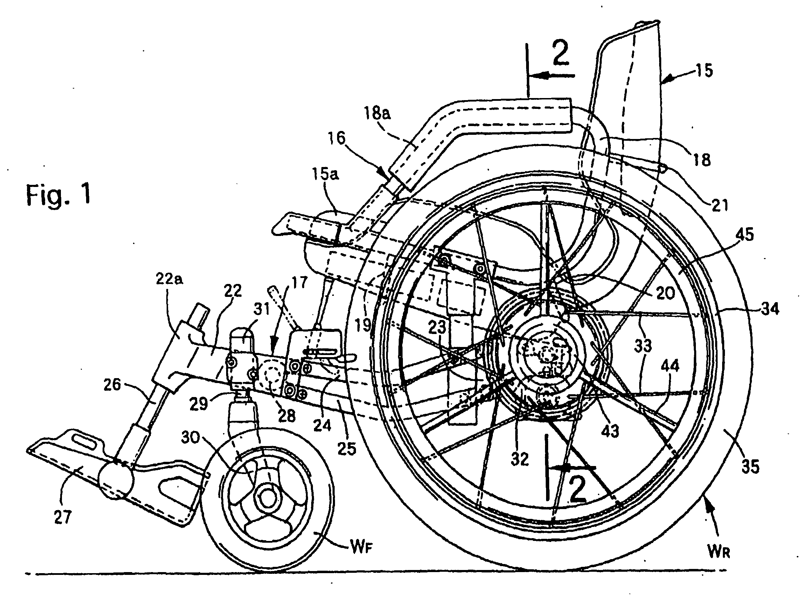

- Fig. 1: is a side view of an electrically-assisted wheel chair to which the first embodiment of the invention is applicable.
- Fig. 2: is a rear view observed in the direction of arrow 2-2 in Fig. 1.
- Fig. 3: is an enlarged longitudinal section of a main part, taken along line 3-3 in Fig. 4.
- Fig. 4: is a view observed in the direction of arrow 4 in Fig. 3.
- Fig. 5: is an enlarged longitudinal section taken along line 5-5 in Fig. 4.
- Fig. 6: is a front view ofthe slip ring observed in the direction of arrow 6-6 in Fig. 3.
- Fig. 7: is a rear view of the inner cover observed in the direction of arrow 7-7 in Fig. 3.
- Fig. 8: is a front view of the slip ring observed in the direction of arrow 8-8 in Fig. 3.
- Fig. 9: is a front view of the outer cover observed in the direction of arrow 9-9 in Fig. 3.
- Fig. 10: is a block diagram showing the configuration of the torque and number of revolutions detecting circuit.
- Fig. 11: is a timing chart showing the output from the number of revolutions detecting circuit and the waveform-shaped outputs.
- Fig. 12: is a cross section taken along line 12-12 in Fig. 3.
- Fig. 13: is a front view of the slip ring in the second embodiment, being similar to Fig. 6.
- Fig. 14: is a timing chart of the electrical signal for number of revolutions detection, obtained from the slip ring shown in Fig. 13.
- Fig. 15: is a rear view of the inner cover used in the third embodiment, being similar to Fig. 7.

Referring to Fig. I first of all, the electrically-assisted wheel chair comprises a seat 15, a pair of rear wheels W_{R} ... positioned at the opposite sides of the seat 15, a pair of front wheels W_{F} ... disposed in front of the rear wheels W_{R} .... The seat 15 is supported by upper frames 16, and the front and rear wheels W_{F} ... and W_{R} ... are supported by a pair of left and right lower frames 17, respectively.

The upper frames 16 are covered by a pair of arms 18a on their top surface, and comprise a pair of side frames 18... disposed at the opposite sides of the seat 15, cross members 19 and 20 which extend across the side frames 18... under a sitting area 15a in order to support the sitting area 15a at two discrete points, and another cross member 21 extending across the side frames 18... behind a seat back 15b in order to support the seat back 15b.

The lower frames 16 extend forward and backward below the upper frames 16, and comprise a pair of front wheel supports 22, a pair of rear wheel supports 23, and a pair of upper and lower tubular frame members 24,25 for coupling the front and rear wheel supports 22 and 23. The frame members 24 and 25 are curved downward at their middle portions.

Each of the front wheel supports 22 includes, as an integral part, a support cylinder 22a which slopes slightly rearward toward its top. Each support rod 26 passes through the support cylinder 22a, and is fixedly supported therein. A height of the support rod 26 is adjustable. A foot rest 27 extends across the lower ends of the support rods 26 supported by the support cylinders 22a... at the front end of the lower frames 17.... Further, a cross member 28 is disposed between rear portions of the front wheel supports 22....

The front wheels W_{F} are casters which are pivotally attached to bottom ends of the support members 30 having caster shafts 29 at their top ends. The caster shafts 29 are rotatably supported by bearing housings 31 fixed to front intermediate portions of the front wheel supports 22.

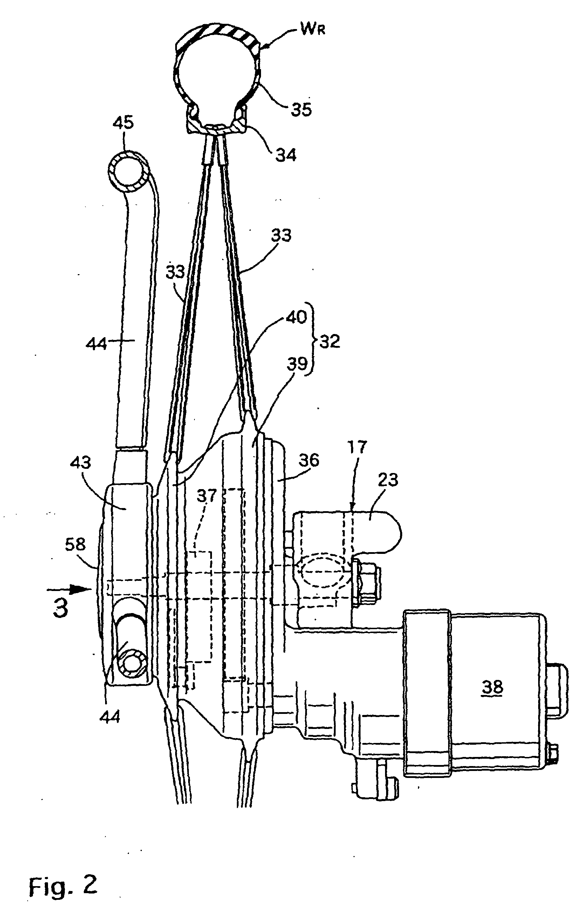

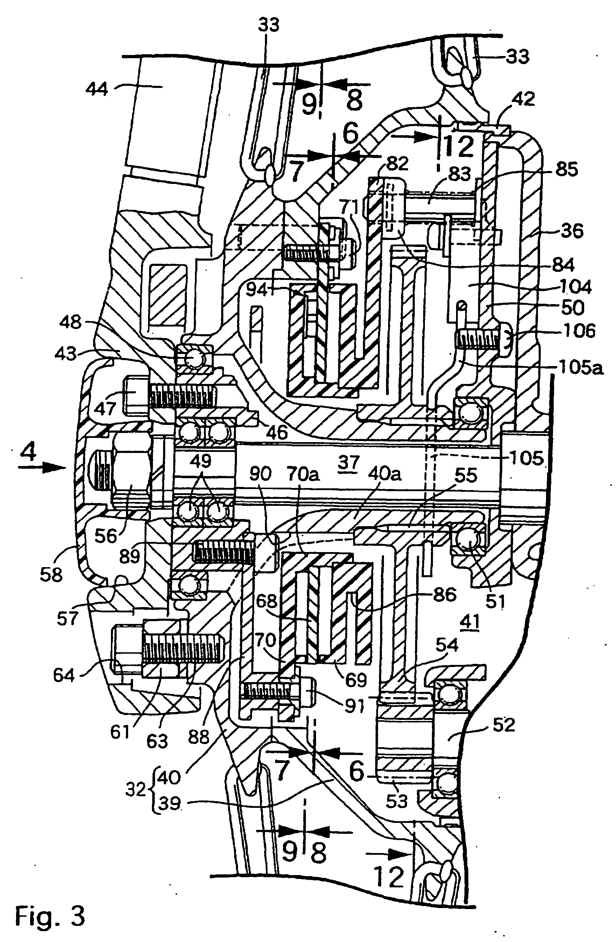

Referring to both Figs. 2 and 3, each rear wheel W_{R} comprises a hub 32 as an annular output rotary member, a plurality of spokes 33... running from a plurality of spaced positions of the hub 32 to a rim 34, and a tire 35 attached around the rim 34.

A cover 36 covering an inner side of the hub 32 and one end of an axle 37 coaxial with the rear wheel W_{R} are detachably fixed to the rear wheel support 23 under the lower frame 17. The axle 37 extends outward via the cover 36 and the hub 32. An electric motor 38 whose rotation axis deviates from the axis of the axle 37 is coupled to the cover 36.

The hub 32 comprises a first hub half 39 which is cylindrical, is coaxial with the axle 37 and is tapered outward, and a second hub half 40 which includes a sleeve 40a coaxially surrounding the axle 37 as an integral part, and is bolted to an outer peripheral edge of the first hub half 39. Half of the spokes 33... are connected to the first hub half 39 while the other half of the spokes 33... are connected to the second hub half 40. Further, an annular sealing member 42 which comes into elastic contact with the inner edge of the first hub half 39 of the hub 32 is attached around an outer peripheral edge of the cover 36 in order to prevent dust from entering into a working chamber 41 defined by the cover 36 and the hub 32.

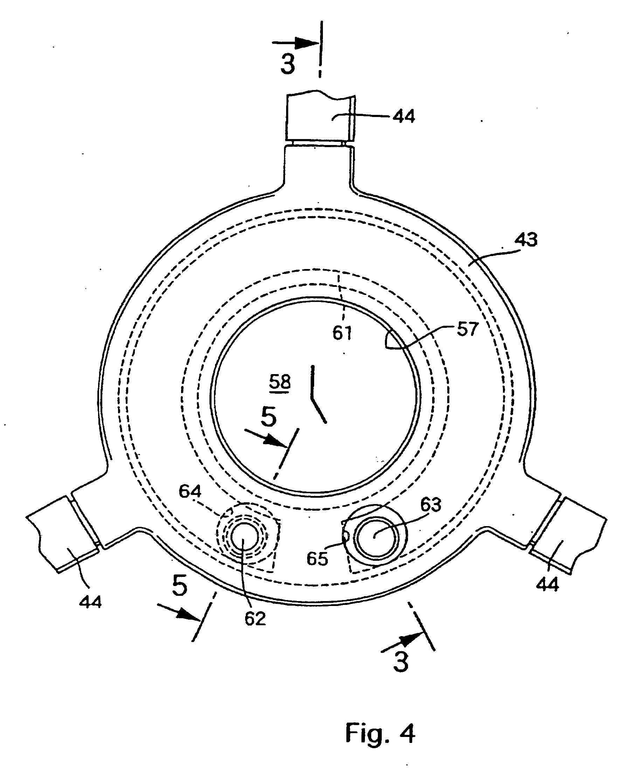

Further referring to Fig. 4, a hand rim hub 43 as an input rotary member is disposed coaxially with the axle 37. A plurality of spokes 44 run from the hand rim hub 43 to an annular hand rim 45 which is coaxial with the axle 37.

An annular member 46 which is coaxial with the axle 37 is fastened to the inner side of the hand rim hub 43 by a plurality of bolts 47.... A bearing 48 is disposed between the annular member 46 and the second hub half 40 of the hub 32. A pair of bearings 49, 49 are disposed between the axle 37 and the annular member 46. In the working chamber 4I, a support plate 50 is attached to an inner surface of the cover 36. A bearing 51 is interposed between an inner edge of the sleeve 40a and the support plate 50. Therefore, the hub 32 is rotatable around the axle 37. The hand rim hub 43 is rotatable around the axle 37 such that it is angularly displaceable relatively with the hub 32.

A drive shaft 52 interlocking with the electric motor 38 is inserted into the working chamber 41. A driven gear 54 engaged with a driving gear 53 fixed to the drive shaft 52 is coupled to the sleeve 40a of the hub 32 via a spline 55. Therefore, power of the electric motor 38 is transmitted to the hub 32, i.e., the rear wheels W_{R}.

A recess 57 is formed on an outer center surface of the hand rim hub 43 in order to receive a nut 56 which is screwed in an outer end of the axle 37 so as to prevent the bearings 49, 49 from being displaced axially outward from the axle 37. A cap 58 is elastically attached to the nut 37 in the recess 57 in order to cover the outer end of the axle 37 and the nut 56.

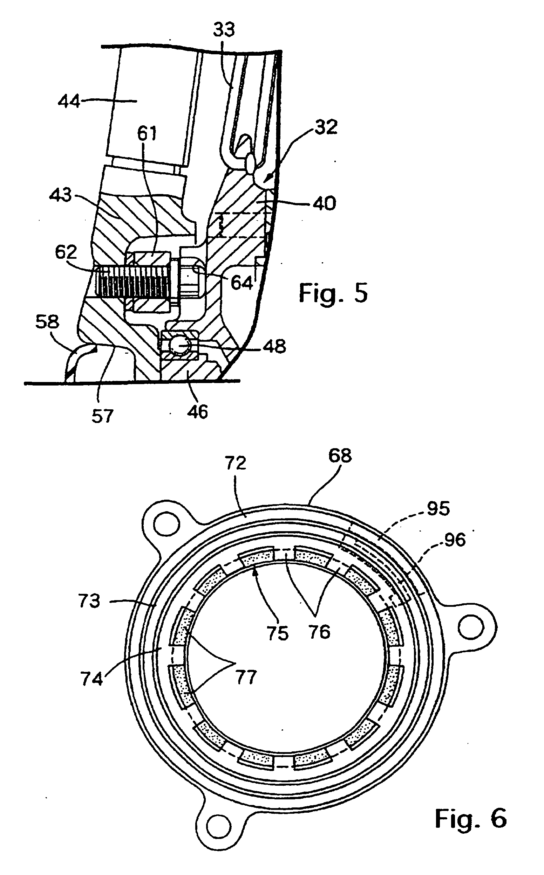

Further referring to Fig. 5, a power transmission member 61 is interposed between the hand rim hub 43 and the hub 32, and provides the hub 32 with input rotating torque which is input to the hand rim hub 43 as the hand rim 45 is manually rotated. The power transmission member 61 is substantially in the shape of the letter C along a virtual circle surrounding the axis of the axle 37 when no external force is applied. Specifically, the power transmission member 61 is positioned between the hand rim hub 43 and the second hub half 40 of the hub 32, and has one end coupled to the hand rim hub 43 by a pin 62 force-fitted to the hand rim hub 43. The other end of the power transmission member 61 is coupled to the second hub half 40 of the hub 32 by a bolt 63. Further, the second hub half 40 has a concave portion 64 for loosely receiving a head of the pin 62. The hand rim hub 43 has a circular opening 65 for loosely receiving the bolt 63.

In response to the rotating torque input to the hand rim hub 43, the power transmission member 61 elastically deforms itself, thereby transmitting the input rotating torque to the hub 32. The power transmission member 61 requires a relatively small space in the direction along the axis of the axle 37, which means that the structure for transmitting power from the hand rim hub 43 to the hub 32 can be made compact and simplified.

The working chamber 41 houses a slip ring 68 as a member to be detected, an inner cover 69 which functions as a stationary member for covering the inner side of the slip ring 68 extending along the axle 37, and an outer cover 70 which functions as a detecting rotary member and covers the outer side of the slip ring 68 extending along the axle 37.

The slip ring 68 is fixed to the inner surface of the outer end of the second hub half 39 of the hub 32 by a plurality of bolts 71···. As shown in Fig. 6, first to third angular conductive tracks 72, 73 and 74 are disposed on a first surface of the slip ring 68, i.e. on the surface opposite to the inner cover 69. The conductive tracks 72, 73 and 74 are concentric with the axle 37, are attached to the slip ring 68 in the named order, and are spaced apart from one another, i.e., the first angular track 72 is most adjacent to the slip ring 68. An angular track 75 for number of revolutions detection is positioned inside the third conductive track 74, and is concentric with the conductive tracks 72 to 74. The slip ring 68 is made of a non-conductive material in the shape of an annular plate. The first to third conductive tracks 72 to 74 are made of conductive foil, and are attached on the first surface of the slip ring 68. The number of revolutions detecting track 75 includes poles 76··· which are made of a conductive material and are present at a plurality of positions, e.g., 12 discrete positions, and a plurality of (12 for example) electrical resistors 77... which are alternately positioned with the poles 76.... The poles 76... communicate with the third conductive annular track 74 at 12 discrete positions, so that the poles 76... have the same potential as that of the third conductive track 74.

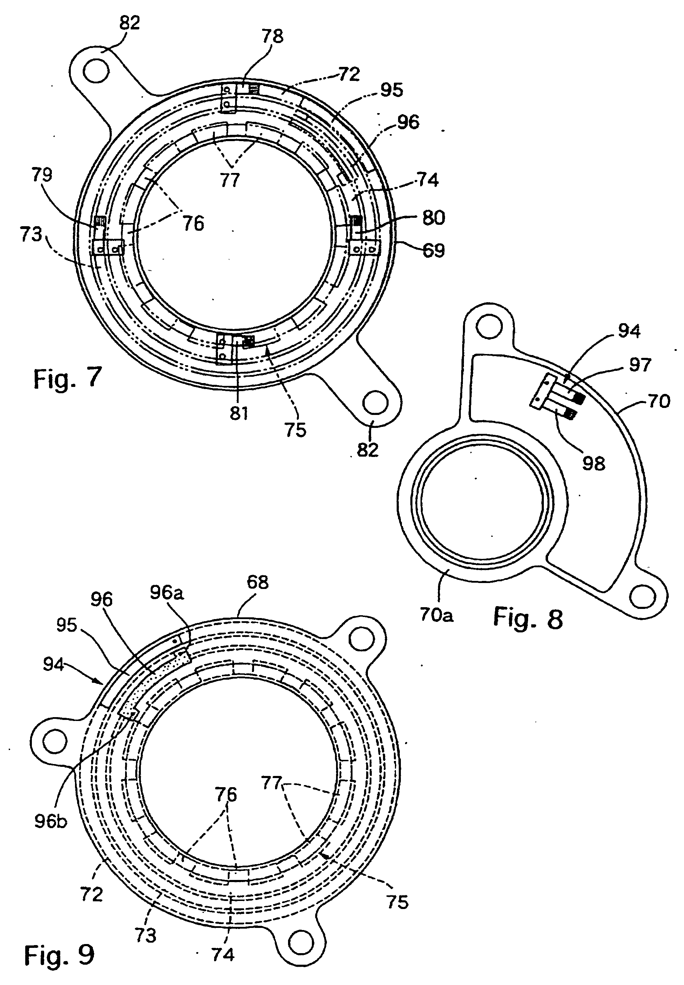

Referring to Fig. 7, the following are annularly arranged on the inner cover 69 on the side confronting the slip ring 68: a first brush 78 in sliding contact with the first conductive track 72, a second brush 79 in sliding contact with the second conductive track 73, a third brush 80 in sliding contact with the third conductive track 74, and a number of revolutions detecting brush 81 in sliding contact with the number of revolutions detecting track 75. The brushes 78, 79, 80 and 81 are arranged in the named order toward the center of the inner cover 69, and are spaced apart from one another.

The inner cover 69 has two integrally provided arms 82, 82 which are spaced from each other and extend outward away from the peripheral edge of the inner cover 69. Tips of guide pins 83... embedded in the support plate 50 fixed to the cover 63 pass through the arms 82, 82. Each guide pin 83 is provided with an arm-shaped receptacle 84, which is in contact with the arm 82 and is axially movable on the guide pin 83. Springs 85... extend between the receptacles 84... and the support plate 50. The springs 85... have relatively weak resilience for urging the inner cover 69 so that the foregoing brushes 78 to 81 are brought into elastic contact with their corresponding tracks 72 to 75, respectively.

The inner cover 69 has an annular groove 86 on its outer peripheral surface, through which conductors (not shown) connected to the brushes 78 to 81 extend outward.

A coupling member 88 is fixedly attached by bolts 89... to the annular member 46 fastened to the hand rim hub 43, at two discrete positions. Specifically, the coupling member 88 is fixed to the annular member 46 by the bolts 89... via through-holes 90... formed on the sleeve 40a of the second hub half 40 in the hub 32. The through-holes 90... have a size for enabling the relative angular displacement of the hub 32 (i.e., sleeve 40a) and the hand rim hub 43 (i.e., coupling member 88).

Referring to Fig. 8, the outer cover 70 is made of a non-conductive material, is substantially in the shape of a sector, and is coupled to the coupling member 88 by bolts 91... at two positions along its outer peripheral edge. The outer cover 70 confronts the slip ring 68 on the side opposite to the inner cover 68. Further, the outer cover 70 includes on its inner peripheral edge a regulating cylindrical member 70a surrounding the sleeve 40a, as an integral member. The regulating cylindrical member 70a supports and regulates the sleeve 40a such that predetermined clearances are maintained between the slip ring 68 and the inner periphery of the inner cover 69 and the slip ring 68 and the inner and outer covers 69 and 70.

A detecting member 94 detects the relative angular displacement between the hub 32 (i. e., the slip ring 68) and the hand rim hub 43 (i. e., outer cover 70) in response to the torque input to the hand rim hub 43, and is interposed between the outer cover 70 and the first surface of the slip ring 68 which is opposite to the second surface confronting the inner cover 69 and is provided with the first to third conductive tracks 72 to 74 and the number of revolutions detecting track 75.

As shown in Fig. 9, the detecting member 94 is in the shape of a sector and coaxial with the axle 37, and comprises a conducting section 95 formed on the first surface of the slip ring 68, an electrical resistor 96 which is in the shape of a sector and coaxial with the axle 37, and is present inside the conducting section 95 on the second surface of the slip ring 68, a fourth brush 97 fixed on the outer cover 70 in order to come into sliding contact with the conducting section 95, and a fifth brush 98 which is fixed on the outer cover 70, is electrically connected with the fourth brush 97, and comes into sliding contact with the electrical resistor 96.

The electrical resistor 96 is electrically connected at opposite ends 96a and 96b to the second and third conductive tracks 73 and 74, respectively.

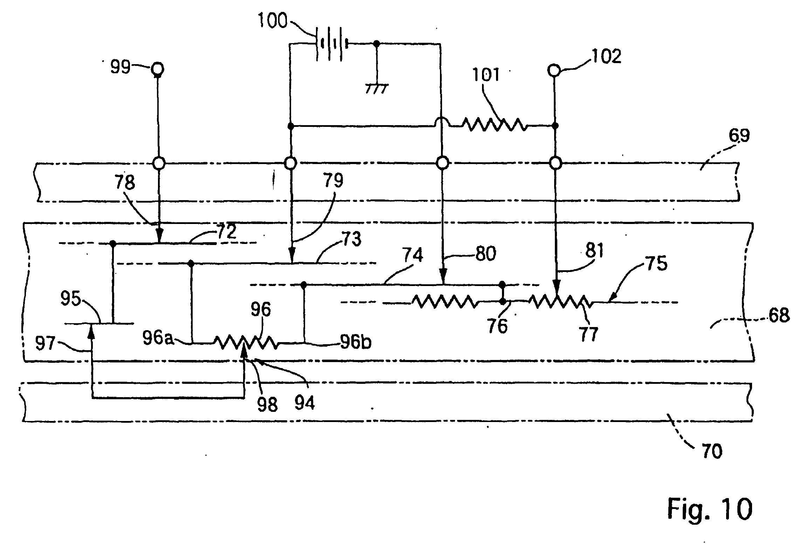

The electrical circuit on the slip ring 68, and the inner and outer covers 69 and 70 is configured as shown in Fig. 10. The first to third bushes 78 to 80 and the number of revolutions detecting brush 81 are fixed to the inner cover 69 which is at the predetermined position with respect to the slip ring 68 and the outer cover 70. The first brush 78 in sliding contact with the first conductive track 72 is connected to a torque detecting terminal 99. The second brush 79 in sliding contact with the second conductive track 73 is connected to a positive side of a battery 100. The third brush 80 in sliding contact with the third conductive track 74 is grounded. A fifth brush 98 is in sliding contact with the electrical resistor 96 to the ends 96a and 96b of which are electrically connected the second and third conductive tracks 72 and 73, respectively. The fifth brush 98 is electrically connected to the first conductive track 72 via the fourth brush 97 and the conductive section 95. Therefore, in the detecting section 96, a voltage acts across the electrical resistor 96 in accordance with an output voltage of the battery 100. When there occurs a relative angular displacement between the sling ring 68 and the outer cover 70 in response to torque input to the hand rim hub 43, the torque detecting terminal 99 outputs a voltage output corresponding to the input torque depending upon a position where the fifth brush 98 comes into contact with the electrical resistor 96 and the distance between the opposite ends of the electrical resistor 96.

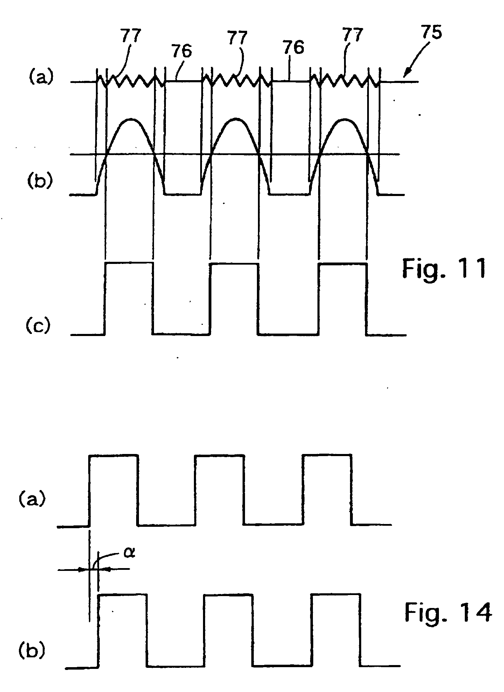

The number of revolutions detecting brush 81 in sliding contact with the number of revolutions detecting track 75 is connected to a positive side of the battery 100 via voltage divider 101. A number of revolutions detecting terminal 102 is connected between the brush 81 and the voltage divider 101. The poles 76... of the number of revolutions detecting track 75 are electrically connected to the third conductive track 74, and are grounded. Therefore, when the slip ring 68 rotates, the number of revolutions detecting terminal 102 receives a voltage output as shown in Fig. 11(a) or a voltage output as shown in Fig. 11(b) which is variable with a position where the number of revolutions detecting track 75 comes into contact with the number of revolutions detecting brush 81. The output from the number of revolutions detecting terminal 81 is waveform-shaped, thereby obtaining an electrical signal which is periodically variable and is in the shape of a pulse, as shown in Fig. 11(c). A frequency of the pulse-shaped electrical signal varies with the rate of revolution of the slip ring 68, i.e., the hub 32, so that it is possible to detect the rate of revolution of the slip ring 68, i.e., the hub 32, by counting pulse signals per unit time.

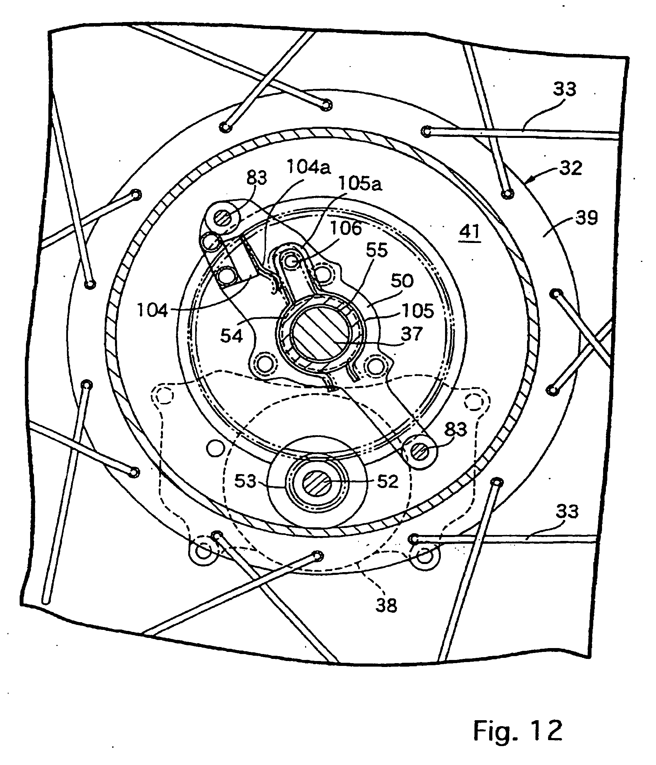

The operation of the electric motor 38 is controlled on the basis of the detected input torque and number of revolutions as described above. In order to determine whether the electric motor 38 should be rotated forward or backward, a switch 104 for detecting a rotating direction is fixed on the support plate 50 as shown in Fig. 12. A spring 105 is attached to an outer periphery of a base of the driven gear 54, and rotates in frictional contact with the driven gear 54 when it is operated. The spring 105 has, as its integral part , a pressing member 105a which is substantially in the shape of the letter U, comes into contact with a detecting piece 104a of the switch 104 and makes the switch 104 conductive when the driven gear 54 is rotated counterclockwise as shown in Fig. 12. Further, the support plate 50 has a regulating pin 106 embedded therein. The pin 106 is at a position corresponding to the pressing member 105a. When the pressing member 105a comes into contact with the regulating in 106, the spring 105 stops rotating following the driven gear 54.

The operation of the first embodiment will be described hereinafter. The slip ring 68 is fixed to the hub 32. The slip ring 68 is provided with the number of revolutions detecting track 75 comprising a plurality of commonly grounded poles 76··· and a plurality of electrical resistors 77··· disposed between the poles 76··· which are arranged around the axis of the hub 32. The number of revolutions detecting brush 81 in sliding contact with the number of revolutions detecting track 75 is disposed on the inner cover 69 which is at the fixed position with respect to the hub 32. In this configuration, it is possible to obtain the periodic electrical signals shown in Fig. I 1 which vary with the contacting positions of the electrical resistors 77··· with the poles 76··· in response to the rotation of the hub 32. Therefore, the rate of revolution of the hub 32 can be detected since the frequency of the electrical signals vary with the varying rate of revolution of the hub 32.

The slip ring 68 is concentric with the first to third conductive tracks 72 to 74 which are attached thereon, thereby providing the inner cover 69 with the electrical signal in accordance with the torque detected by the detecting section 94. Effective use of the slip ring 68 facilitates the detection of the rate of revolution of the hub 32 using a simplified and compact structure without an increase in a number of components.

The first to third conductive tracks 72 to 74 and the number of revolutions detecting track 75 are disposed on the first surface of the inner cover 69 of the slip ring 68. The detecting section 94 for torque detection is disposed between the second surface of the slip ring 68 and the outer cover 70 which rotates integrally with the hand rim hub 43. Thus, through effective use of the opposite surfaces of the slip ring 68, it is possible to detect the torque and number of revolutions using the compact structure.

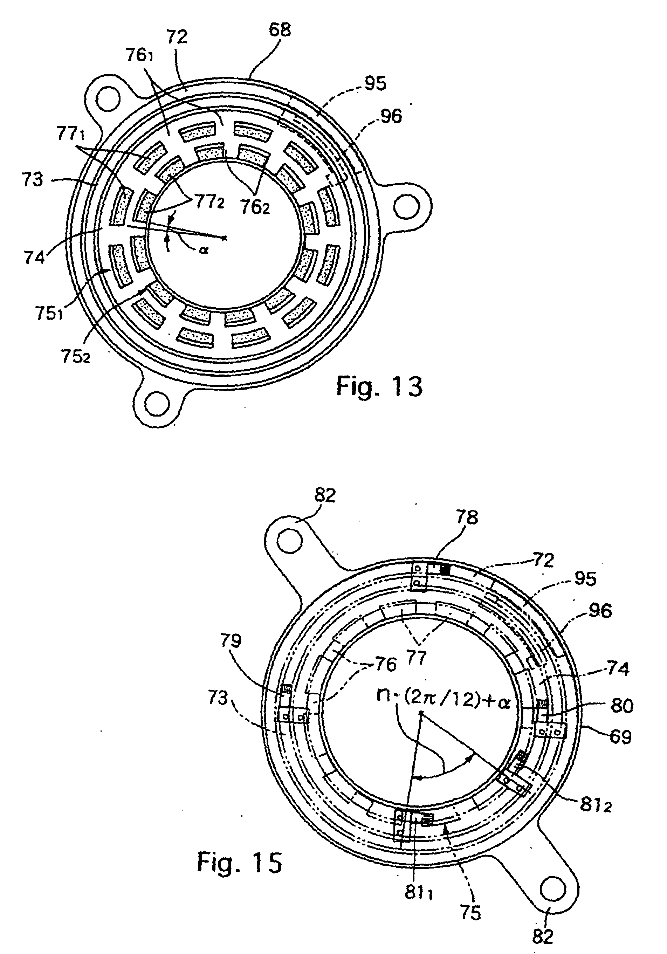

Figs. 13 and 14 show a second embodiment of the invention.

The following are concentrically arranged on the slip ring 68; a number of revolutions detecting track 75, including a plurality of (e.g., 12) poles 76₁··· which are made of a conductive material and are equally spaced, and electrical resistors 77₁··· interposed between the poles 76₁···; and a number of revolutions detecting track 75₂ including a plurality of (e.g., 12) poles 76₂ which are equally spaced, and electrical resistors 77₁₂··· disposed between the poles 76₂···. Both of the poles 76₁··· and 76₂··· are commonly connected to the third conductive track 74, and have the same potential as that of the third conductive track 74.

The number of revolutions detecting tracks 75₁ and 75₂ are annularly arranged on the slip ring 68 with a phase difference α. Therefore, it is possible to obtain two electrical pulse signals whose phases are shifted by α as shown in Figs. 14(a) and 14(b). The rotating directions of the slip ring 68, i.e., the hub 32, can be detected on the basis of the fact that a relative timing of these electrical pulse signals varies with the rotating directions of the slip ring 68. For instance, when the rise of the signal (a) is detected after the phase difference α following the rise of the signal (b), the hub 32 is considered to be rotating forward. Conversely, when the rise of the signal (b) is detected after the phase difference α following the rise of the signal(a), the hub 32 is considered to be rotating backward. Therefore, the rotating direction can be detected in addition to the number of revolutions.

A third embodiment of the invention is shown in Fig. 15. A pair of number of revolutions detecting brushes 81₁ and 81₂ are fixed on the inner cover 69, and are in sliding contact with the number of revolutions detecting track 75 on the slip ring 68.

Further, the number of revolutions detecting brushes 81₁ and 81₂ are displaced from each other by {n·(2 π/N) + α} where N denotes a number of the poles 76··· and electrical resistors 77··· and is 12 in this embodiment, and "n" denotes an integer of 1 to N. In other words, a pair of the number of revolutions detecting brushes 81₁ and 81₂ in contact with the number of revolutions detecting track 75 are arranged such that they come in to contact with the poles 76··· and electrical resistors 77··· on the number of revolutions detecting track 75, at positions which are displaced with the phase difference of α.

According to the third embodiment, it is possible to obtain from the brushes 81₁ and 81₂ the electrical pulse signals which are produced at timings shown in Figs. 14(a) and 14(b). Similarly to the second embodiment, the rotating direction as well as the number of revolutions can be detected.

The slip ring 68 to be detected is fixed to the hub 32 as the output rotary member in the foregoing embodiments. Alternatively, the detected member may be fixed to the input rotary member, and the revolution detecting member may be fixed to the output rotary member.

The present invention has been described with respect to the electrically-assisted wheel chair. Alternatively, the invention is also applicable as a torque sensor or a number of revolutions sensor for a device in which rotating torque input to an input rotary member is transmitted to an output rotary member via a power transmission member which is elastically deformed in response to the rotating torque.

The invention provides a detecting unit for detecting not only torque but also number of revolutions of rotary members without increasing a number of components.

The number of revolutions detecting track 75 which is annular and contacts number of revolutions detecting brushes, disposed on the stationary member, with the slip ring 68 is arranged concentrically with a plurality of conductive tracks 72 to 74 on the slip ring 46 in order that the number of revolutions detecting track 75 receives from the number of revolutions detecting brushes electrical signals which periodically vary in response to the rotation of the slip ring 68.

## Claims

1. A torque and number of revolutions sensor comprising: an output rotary member (32), an input rotary member (43) rotatable coaxially with the output rotary member (32); a power transmission member (61) being elastically deformed in response to rotating torque input to the input rotary member (43) and transmitting the rotating torque to the output rotary member (32); a stationary member (69) disposed at a predetermined position with respect to the output and input rotary members (32, 43); a detecting member (94) for detecting relative angular displacement of the output and input rotary members (32, 43) in response to the torque input to the input rotary member (43); and a slip ring (68) having a plurality of conductive tracks (72, 73, 74) which are integrally rotatable with one (32) of the output rotary member and the input rotary member in order to provide the stationary member (69) with electrical signals detected by the detecting member (94), and are arranged concentrically and annularly, wherein number of revolutions detecting annular tracks (75, 75₁, 75₂) contacting number of revolutions detecting brushes (81, 81₁, 82₂) with the slip ring (68), being disposed concentrically with the plurality of conductive tracks (72 to 74) and receiving from the number of revolutions detecting brushes (81, 81₁, 82₂) electrical signals varying periodically in response to the revolution of the slip ring (68), wherein the plurality of conductive tracks (72 to 74) and the speed detecting tracks (75; 75₁, 75₂) are disposed on a first surface of the slip ring (68) confronting the stationary member (69), and the detecting member (94) is interposed between a second surface of the slip ring (68) and a detecting rotary member (70) which confronts the second surface of the slip ring (68) in a manner such that the other (43) of the output rotary member and the input rotary member is integrally rotatable with the detecting rotary member (70).

## Patentansprüche

1. Drehmoment- und Drehzahlsensor, umfassend: ein Ausgangsdrehelement (32); ein Eingangsdrehelement (43), das koaxial zu dem Ausgangsdrehelement (32) drehbar ist; ein Kraftübertragungselement (61), das in Antwort auf eine Drehmomenteingabe in das Eingangsdrehmoment (43) elastisch verformt wird und das Drehmoment auf das Ausgangsdrehelement (32) überträgt; ein stationäres Element (69), das an einer vorbestimmten Position in Bezug auf das Ausgangs- und das Eingangsdrehelement (32, 43) angeordnet ist; ein Erfassungselement (94) zum Erfassen eines relativen Winkelversatzes des Ausgangs- und Eingangsdrehelements (32, 43) in Antwort auf die Drehmomenteingabe in das Eingangsdrehelement (43); sowie einen Schleifring (68), der eine Mehrzahl von Leiterbahnen (72, 73, 74) aufweist, die integral mit einem (32) des Ausgangsdrehelements und des Eingangsdrehelements drehbar sind, um dem stationären Element (69) elektrische Signale zu liefern, die von dem Erfassungselement (94) erfasst werden, und die konzentrisch und ringförmig angeordnet sind, worin Drehzahlerfassungsringbahnen (75, 75₁, 75₂) Drehzahlerfassungsbürsten (81, 81₁, 81₂) mit dem Schleifring (68) kontaktieren, konzentrisch zu der Mehrzahl von Leiterbahnen (72 bis 74) angeordnet sind und von den Drehzahlerfassungsbürsten (81, 81₁, 81₂) elektrische Signale empfangen, die sich in Antwort auf die Drehung des Schleifrings (68) periodisch verändern, worin die Mehrzahl von Leiterbahnen (72 bis 74) und die Drehzahlerfassungsbahnen (75; 75₁, 75₂) auf einer ersten Fläche des Schleifrings (68) angeordnet sind, die dem stationären Element (69) gegenüberliegt, und das Erfassungselement (94) zwischen einer zweiten Fläche des Schleifrings (68) und einem Erfassungsdrehelement (70) angeordnet ist, das der zweiten Fläche des Schleifrings (68) gegenüberliegt, derart, dass das andere (43) des Ausgangsdrehelements und des Eingangsdrehelements mit dem Erfassungsdrehelement (70) integral drehbar ist.

## Revendications

1. Capteur de couple et de nombre de tours, comprenant : un élément rotatif de sortie (32), un élément rotatif d'entrée (43) pouvant tourner coaxialement à l'élément rotatif de sortie (32) ; un élément de transmission de puissance (61) étant déformé de façon élastique en réponse à l'entrée d'un couple de giration dans l'élément rotatif d'entrée (43), et transmettant le couple de giration à l'élément rotatif de sortie (32) ; un élément fixe (69) disposé à une position prédéterminée par rapport aux éléments rotatifs d'entrée et de sortie (32, 43) ; un élément détecteur (94) pour détecter un déplacement angulaire relatif des éléments rotatifs d'entrée et de sortie (32, 43) en réponse à l'entrée du couple dans l'élément rotatif d'entrée (43) ; et une bague collectrice (68) comportant une pluralité de pistes conductrices (72, 73, 74) qui peuvent tourner d'un seul tenant avec l'un (32) de l'élément rotatif de sortie et de l'élément rotatif d'entrée de façon à transmettre, à l'élément fixe (69), des signaux électriques détectés par l'élément détecteur (94), et qui sont disposées de manière concentrique et annulaire, dans lequel des pistes annulaires et détectrices du nombre de tours (75, 75₁, 75₂) mettent en contact des brosses détectrices du nombre de tours (81, 81₁, 81₂) avec la bague collectrice (68), les pistes annulaires et détectrices du nombre de tours étant disposées concentriquement à la pluralité de pistes conductrices (72 à 74) et recevant, en provenance des brosses détectrices du nombre de tours (81, 81₁, 81₂), des signaux électriques variant périodiquement en réponse à la rotation de la bague collectrice (68), dans lequel la pluralité de pistes conductrices (72 à 74) et les pistes détectrices de vitesse (75, 75₁, 75₂) sont disposées sur un première surface de la bague collectrice (68) faisant face à l'élément fixe (69), et l'élément détecteur (94) est interposé entre une seconde surface de la bague collectrice (68) et un élément rotatif détecteur (70) qui fait face à la seconde surface de la bague collectrice (68) de telle façon que l'autre (43) de l'élément rotatif de sortie et de l'élément rotatif d'entrée peut tourner d'un seul tenant avec l'élément rotatif détecteur (70).
